(19) Europäisches Patentamt

European Patent Office

Office européen des brevets

(11) EP 0 893 193 B1

(12) EUROPÄISCHE PATENTSCHRIFT

(45) Veröffentlichungstag und Bekanntmachung des Hinweises auf die Patenterteilung:
09.10.2002 Patentblatt 2002/41

(51) Int Cl.⁷: **B23K 35/363**

(21) Anmeldenummer: 98111842.5

(22) Anmeldetag: 26.06.1998

(54) **Lotpaste zum Hartlöten und Beschichten von Aluminium und Aluminiumlegierungen**

Brazing paste for coating and brazing of aluminium and aluminium alloys

Pâte de brasure pour le revêtement et le brasage d'aluminium et d'alliages d'aluminium

(84) Benannte Vertragsstaaten:
AT BE CH CY DE DK ES FI FR GB GR IE IT LI LU MC NL PT SE

(30) Priorität: 21.07.1997 DE 19731151

(43) Veröffentlichungstag der Anmeldung:
27.01.1999 Patentblatt 1999/04

(73) Patentinhaber: BrazeTec GmbH
63457 Hanau (DE)

(72) Erfinder:
• Koch, Jürgen, Dr.
  63165 Mühlheim (DE)
• Staab, Leander
  63776 Mömbris (DE)
• Kohlweiler, Wolfgang
  60431 Frankfurt (DE)
• Starz, Karl-Anton, Dr.
  63517 Rodenbach (DE)

(74) Vertreter: Hirsch, Hans-Ludwig
Degussa-Hüls Aktiengesellschaft
Patente und Marken
Standort Wolfgang
Postfach 13 45
63403 Hanau (DE)

(56) Entgegenhaltungen:
EP-A- 0 512 489          EP-A- 0 556 864
WO-A-90/13393          CH-A- 329 824
FR-A- 2 452 996          US-A- 2 522 937

**Beschreibung**

Die Erfindung betrifft eine Hartlotpaste zum Verbinden und Beschichten von Werkstücken aus Aluminium oder Aluminiumlegierungen.

Zum Verbinden von Werkstücken aus Aluminium oder Aluminiumlegierungen werden in der Technik neben dem Schweißen in zunehmendem Maße auch Hartlötverfahren eingesetzt. Hierbei werden die Werkstücke mit Hilfe von metallischen Lotmaterialien und unter Verwendung von Flußmitteln, die als Lösung, Suspension oder Paste vorliegen können, durch Wärmezufuhr mechanisch fest und formschlüssig verlötet.

Zum Löten von Aluminium oder Aluminiumlegierungen werden Lotlegierungen benötigt, die einen niedrigeren Schmelzpunkt als die zu verbindenden Werkstücke aufweisen. In der Regel werden hierfür Aluminiumlegierungen mit schmelzpunkterniedrigenden Zusätzen wie Silicium, Kupfer oder Zink eingesetzt.

Die Flußmittel haben die Aufgabe, durch Auflösung der störenden Oxidschichten auf den Werkstücken und Lotmaterialien für eine gute Benetzung beim Lötprozeß zu sorgen. Als Flußmittel für die Lötung von Aluminium werden üblicherweise Mischungen von Fluoriden und Chloriden der Alkali- und Erdalkalimetalle oder komplexe Alkalialuminiumfluoride verwendet.

Bei der Ofenlötung werden vorzugsweise Flußmittel auf Basis komplexer Alkalialuminiumfluoride eingesetzt, da diese nichtkorrosiv sind. Weiterhin entfallen bei diesen Flußmitteln zusätzliche kostenintensive Reinigungsschritte, um nach dem Lötvorgang das Flußmittel bzw. dessen Reaktionsprodukte von den Werkstückoberflächen zu entfernen.

Zur Vereinfachung des Produktionsprozesses, insbesondere bei der Serienfertigung mit hohen Stückzahlen, werden in neuerer Zeit zum Löten von Aluminium bevorzugt Hartlotpasten benutzt, die aus einem vorgefertigten Gemisch von Lotpulver, Flußmittel und Bindemitteln bestehen. Die zu verbindenden Werkstücke werden hierzu mit der Hartlotpaste beschichtet und anschließend, zum Beispiel in einem Durchlaufofen, verlötet. Die Lötung kann an Luft durchgeführt werden. Zur Vermeidung der Oxidation der Werkstücke und des Lotpulvers wird jedoch häufig unter Schutzgasatmosphäre (Stickstoff/Wasserstoff) gearbeitet.

Neben den Bestandteilen Lotpulver und Flußmittel hat gerade im Hinblick auf das Lagerverhalten sowie auf die Dosierbarkeit und die Applikation der Lotpaste das organische Bindemittel eine große Bedeutung. Dieses hat hierbei hauptsächlich die Aufgabe, die Lot- und Flußmittelpulver in feinverteilter Form so in Schwebe zu halten, daß keine Zementation der dispergierten Partikel erfolgt und auch nach längerer Lagerung eine problemlose Dosierbarkeit gewährleistet ist. Zusätzlich müssen die rheologischen Eigenschaften des Bindemittels so abgestimmt sein, daß die andosierten Pastendepots während der Trocknungs- und Erwärmungsphase nicht verlaufen. Üblicherweise besteht das Bindemittel von Lotpasten aus einer Lösung verschiedener Polymere in organischen Lösungsmitteln. Entsprechend den Einsatz- und Lötbedingungen werden hierfür in der Regel Cellulosederivate, wie z.B. Ethylcellulose, Hydroxyethylcellulose, Hydroxypropylcellulose, oder Polymethacrylate in hochsiedenden Kohlenwasserstoffen, Alkoholen, Glykolen oder Polyalkylenglycolen eingesetzt.

An diese Hartlotpasten werden gerade im Hinblick auf die automatisierte Serienfertigung sehr hohe Anforderungen gestellt.

Die Applikation der Lotpasten erfolgt in den meisten Fällen durch automatische Dosiersysteme. Hier muß gewährleistet sein, daß bei der Lagerung und Dosierung der Paste keine Trennung in die einzelnen Bestandteile erfolgt und die Viskosität auch über einen längeren Zeitraum hin konstant bleibt.

Nach dem Andosieren der Lotpaste durchläuft das Werkstück die Vorwärmzone des Ofens, wobei die Lotpaste antrocknet. In dieser Phase des Lötprozesses ist es wichtig, daß die Paste infolge der Viskositätserniedrigung beim Erwärmen nicht vom Bauteil abläuft, sondern an der gewünschten Stelle verbleibt. Gerade beim Andosieren an senkrechten Stellen kann es sonst durch das Ablaufen der Lotpaste zu einem Lotunterschuß an der Lötstelle kommen, was zu einer fehlerhaften Lötung und damit einer Zunahme des Ausschußanteils führt.

Weiterhin muß gewährleistet sein, daß das Bindemittelsystem der Lotpaste schon vor Erreichen der Löttemperatur vollständig abgedampft oder ausgebrannt ist, damit die Wirksamkeit des Flußmittels nicht beeinträchtigt und der Lotfluß nicht gehindert wird. Aus optischen und prüftechnischen Gründen ist es zusätzlich wünschenswert, daß nach dem Lötprozeß keine schwarzen Rückstände auf der Lötstelle verbleiben, die eine visuelle Inspektion der Lötverbindung verhindern.

Zusätzlich ist es aus ökonomischen und ökologischen Gründen wünschenswert, daß die Hartlotpasten wasserverdünnbar sind, damit die Gebinde und Dosiereinrichtungen mit Wasser gereinigt werden können. Teure und wenig umweltverträgliche, nicht mit Wasser mischbare organische Lösemittel sollten in der Produktion vermieden werden.

In EP 0 512 489 wird eine Aluminiumhartlotpaste beschrieben, deren Bindemittel aus einem flüssigen Polyisobutylenpolymer besteht. Die Bindemittel dieser Pasten zeigen jedoch kein thixotropes Verhalten, sodaß die andosierten Pastendepots vor dem eigentlichen Lötprozeß vom Bauteil ablaufen können. Weiterhin können diese Lotpasten nicht mit Wasser verdünnt und abgewaschen werden.

EP 0 475 956 beschreibt eine Lotpaste zum Hartlöten von Aluminium, deren Bindemittel aus sehr reinem Monopropylenglykol ohne höhermolekulare Anteile besteht.

Dieses Lösungsmittel ist aufgrund der hohen Reinheit sehr teuer. Zudem zeigen die Lotpasten aus solchen Bindemitteln keinerlei thixotropes Verhalten, was dazu führt, daß sich die Paste während der Lagerung durch Absetzen des Lotpulvers entmischt.

Es war daher Aufgabe der vorliegenden Erfindung, eine mit Wasser verdünnbare, lagerstabile Hartlotpaste zum Beschichten und Verbinden von Aluminium oder Aluminiumlegierungen zu entwickeln, die aufgrund ihrer thixotropen Konsistenz mit automatischen Dosiereinrichtungen aufgebracht werden kann, beim anschließenden Aufwärmprozeß nicht vom Bauteil abläuft und nach dem Lötprozeß keine schwarzen Zersetzungsprodukte des Bindemittels hinterläßt.

Es wurde nun gefunden, daß diese Anforderungen von einer Aluminiumhartlotpaste erfüllt werden, die 25 bis 35 Gew.% eines wasserverdünnbaren organischen Bindemittels auf Basis aliphatischer Glycole, 25 bis 45 Gew.% eines Aluminiumhartlots und 25 bis 45 Gew.% eines Aluminium-Flußmittels und weiterhin als ein die rheologischen Eigenschaften beeinflussendes Additiv 0,01 bis 0,2 Gew.%, bezogen auf die Gesamtmenge, von ein oder mehreren gesättigten Fettsäuren mit 10 bis 20 C-Atomen und/oder deren Ammoniumsalze enthält.

Gegenstand der Erfindung ist somit eine wie vorstehend charakterisierte Aluminiumhartlotpaste.

Gegenstand der Erfindung ist weiterhin die Verwendung von gesättigten Fettsäuren mit 10-20 C-Atomen und/oder deren Ammoniumsalze in einem Anteil von 0,01 bis 0,2 Gew.%, bezogen auf die Gesamtmenge, zur Beeinflussung der rheologischen Eigenschaften, insbesondere zur Erhöhung der Thixotropie und/oder der Strukturviskosität von derartigen wasserverdünnbaren Aluminium-Hartlotpasten.

In der erfindungsgemäßen Lotpaste können als Hartlotpulver zum Beschichten und Fügen von Aluminium und Aluminiumlegierungen alle Aluminiumhartlote eingesetzt werden, die eine niedrigere Schmelztemperatur als die zu fügenden oder zu beschichtenden Grundwerkstoffe aufweisen. Hierzu zählen beispielsweise die reinen binären Aluminium-Silicium-Hartlote Al-Si 5-12%, aber auch die niedrigschmelzenden ternären Systeme wie Al-Si 5-12% mit Zusätzen von Cu, Mg oder Zn. Die mittlere Korngröße der eingesetzten Aluminiumhartlotpulver liegt zwischen 10 µm und 500 µm. Vorzugsweise werden Lotpulver mit einer Kornverteilung von 50 µm bis 150 µm eingesetzt, da einerseits zu grobe Pulverpartikel leicht die Dosiereinrichtung verstopfen und eher zum Absetzen neigen und andererseits Pulver mit einem hohen Feinanteil aufgrund des durch die größere Oberfläche ansteigenden Oxidgehaltes in der Regel das Lötergebnis verschlechtern. Zur Erreichung einer zuverlässigen, stoffschlüssigen Verbindung ist es daher wünschenswert, daß der Oxidgehalt der Hartlotpulver weniger als 0.2%, vorzugsweise weniger als 0.1% beträgt.

Der Gehalt an Lotpulver in der erfindungsgemäßen Lotpaste beträgt 25 bis 45 Gew.%, vorzugsweise 30 bis 40 Gew.%, bezogen auf die Gesamtmenge.

Die in der erfindungsgemäßen Lotpaste eingesetzten Flußmittel sind bezüglich ihrer Wirktemperaturen auf die Arbeitstemperaturen der verwendeten Hartlote abgestimmt. Typische Flußmittel sind beispielsweise die nichtkorrosiven, wasserunlöslichen Salze oder Salzgemische komplexer Alkalialuminiumfluoride wie $KAlF_4$, $KAlF_4$ und $K_2AlF_5$, $KAlF_4$ und $K_3AlF_6$ mit Wirktemperaturen ab 580°C. Die Auswahl der Flußmittel ist aber nicht notwendigerweise auf diese Verbindungsklasse beschränkt. Auch Mischungen von $AlF_3$ und KF oder Cäsiumaluminiumfluoride können Verwendung finden. Die nötige Flußmittelmenge richtet sich im allgemeinen nach dem Lotgehalt der Pasten. Üblicherweise beträgt die Flußmittelkonzentration in der Lotpaste 25 - 45%, vorzugsweise 30 - 40 %, bezogen auf die Gesamtmenge.

Die erfindungsgemäßen Aluminiumhartlotpasten enthalten als Bindemittel im wesentlichen wassermischbare organische Lösungsmittel. Beste Ergebnisse werden mit aliphatischen Glykolen wie zum Beispiel Ethylenglycol, Propylenglykol, Diethylenglykol, Triethylenglykol, Dipropylenglykol und Hexylenglykol oder Mischungen dieser Lösungsmittel erzielt. Sie sind daher wasserverdünnbar und insoweit wesentlich umweltverträglicher. Der Anteil an derartigen Bindemitteln in der Lotpaste beträgt 25 bis 35 Gew.% vorzugsweise 27 bis 30 Gew.%, bezogen auf die Gesamtmenge.

Überraschenderweise hat sich nun gezeigt, daß durch Zugabe geringer Mengen höhermolekularer gesättigter Carbonsäuren oder deren Ammoniumsalzen zu einer Aluminiumhartlotpaste, bestehend aus Lotpulver, Flußmittel und einem Bindemittel aus aliphatischen Glykolen, die rheologischen Eigenschaften der Lotpaste in weiten Grenzen variiert werden können. Erfindungsgemäß enthält die wasserverdünnbare Aluminium-Hartlotpaste 0,01 bis 0,2 Gew.%, bezogen auf die Gesamtmenge, von ein oder mehreren gesättigten Fettsäuren mit 10 bis 20 C-Atomen und/oder deren Ammoniumsalze. Selbst so geringe Mengen wie 0,01 Gew.% bewirken bereits eine deutliche Erhöhung der Thixotropie und der Strukturviskosität. Das ursprüngliche newtonsche Fließen der Lotpaste geht nach Einarbeitung des Additivs in ein pseudoplastisches Verhalten über. Ab einem Zusatz von 0.15% ist die Lotpaste trotz niedriger Viskosität nicht mehr selbstfließend. Über 0,2 Gew.% sind die rheologischen Eigenschaften nicht mehr praxisgerecht. Die verdickende Wirkung tritt nur bei höhermolekularen, gesättigten Carbonsäuren mit 10 bis 20 C-Atomen und deren Ammoniumsalzen ein und ist umso ausgeprägter, je länger der aliphatische unpolare Alkylrest der Carbonsäure ist. Bemerkenswert ist, daß Carbonsäuren mit weniger als 10 Kohlenstoffatomen diesen thixotropierenden Effekt nicht zeigen. Auch die ein- und mehrwertigen Metallsalze dieser Säuren (z.B. Kaliumpalmitat, Aluminiumstearat, Magnesiumstearat etc.) können nicht verwendet werden, da sie nicht thixotropierend wirken bzw. korrosive Reste hinterlassen und den Lötvorgang stören. Fettsäuren mit mehr als 20 C-Atomen beeinflussen die rheologischen Eigenschaften in nicht praxisgerechter Weise.

Sehr gute Ergebnisse werden mit Laurin-, Myristin-, Palmitin- und Stearinsäure bzw. deren Ammoniumsalzen erzielt. Die erfindungsgemäßen Hartlotpasten mit Zusätzen dieser Additive sind viskositätsstabil und zeigen bei Lagerung über drei Monate keine Zementation von Flußmittel- und Lotpulver. Sie sind daher mit automatischen Dosiereinrichtungen einfach und reproduzierbar zu dosieren. Erstaunlicherweise verlaufen die andosierten Pastendepots während des Trocknens und Erwärmens auch an senkrechten Flächen nicht und schmelzen bei Löttemperatur, ohne daß störende organische Zersetzungsprodukte gebildet werden.

Zur Herstellung der erfindungsgemäßen Hartlotpasten wird zuerst das pulverförmige Flußmittel mit üblichen Dispergierapparaturen in das vorgelegte Glykol-Bindemittel eingerührt und nach vollständiger Homogenisierung mit der zur Erzielung der gewünschten Strukturviskosität notwendigen Menge Additiv von 0,01-0,2 Gew.% vorzugsweise 0,02-0,1 Gew.% versetzt. Anschließend wird die entsprechende Menge Aluminiumhartlotpulver in das fertige Bindemittel eingebracht. Danach ist die Lotpaste gebrauchsfertig und kann abgefüllt werden. Die nachfolgenden Beispiele sollen die Erfindung näher erläutern.

Beispiel 1

Pastenzusammensetzung

| 272,10 kg | Hexylenglykol |
|---|---|
| 332,70 kg | Flußmittel auf Basis KAIF$_4$ (AluBraze F 32/80) |
| 394,40 kg | Lotpulver AlSi 88/12, Partikelgröße <150 μm |
| 0,80 kg | Ammoniumstearat |
| 1000,00 kg | |

Das Lösungsmittel wird mit einem Flügelrührer bei Raumtemperatur sukzessive mit dem Flußmittel und dem Additiv versetzt und 30 Minuten intensiv gemischt. Nach portionsweiser Zugabe des Aluminiumhartlotpulvers wird die Vormischung unter langsamen Rühren auf Raumtemperatur abkühlt. Die gebrauchsfertige Lotpaste hat eine Viskosität von 450-500 dPa·s bei 25 °C.

Mit dieser Paste wird eine T-Stoßlötung unter reinem Stickstoff durchgeführt. Hierzu wird die Paste mit einem automatischen Dosiergerät (Dosimat 1000 DVE der Fa. GLT, 1.5 bar, 2 mm Nadeldurchmesser) am oberen Blech des T-Stoßes andosiert und induktiv aufgeheizt. Während der Trocknungs- und Aufwärmphase läuft die Lotpaste nicht vom Bauteil ab. Erst nach Erreichen des Schmelzpunktes der Lot/Flußmittelmischung schmilzt das Pastendepot ohne Bildung störender Zersetzungsprodukte auf und füllt den Lotspalt zwischen den beiden Aluminiumblechen vollständig aus.

Beispiel 2

| 249,40 kg | Dipropylenglykol |
|---|---|
| 24,30 kg | Hexylenglykol |
| 394,70 kg | Flußmittel auf Basis KAIF$_4$ (Degussa bx) |
| 331,20 kg | Lotpulver AlSi 90/10, Partikelgröße <90 μm |
| 0.30 kg | Palmitinsäure |
| 1000.00 kg | |

Die Lösungsmittel werden gemischt und nacheinander unter Rühren mit einem Dissolver mit der Palmitinsäure und dem Flußmittel- und Lotpulver vermischt.
Die Endviskosität der Aluminiumhartlotpaste beträgt bei Raumtemperatur 150-200 dPa·s. Trotz dieser niedrigen Viskosität setzt diese Lotpaste auch bei 3-monatiger Lagerung nicht ab und zeigt eine ausgezeichnete Strukturviskosität. Die Lotpaste wird im Siebdruck (21 T, 150 μm Maschenweite) in einer Naßschichtdicke von 100 μm auf ein Aluminiumblech aufgebracht, getrocknet und anschließend im Schutzgasdurchlaufofen unter Stickstoff aufgeschmolzen. Nach dem Lötvorgang hat sich auf dem Aluminiumblech eine im Mittel 35 μm dicke Hartlotschicht ausgebildet.

**Patentansprüche**

1. Lotpaste zum Hartlöten und Beschichten von Werkstücken aus Aluminium oder Aluminiumlegierungen, enthaltend 25 bis 35 Gew.% eines wasserverdünnbaren organischen Bindemittels auf Basis aliphatischer Glycole, 25 bis 45 Gew.% eines Aluminium-Hartlotpulvers und 25 bis 45 Gew.-% eines Aluminium-Flußmittels, **dadurch gekennzeichnet,** **daß** sie 0,01 bis 0,2 Gew.%, bezogen auf die Gesamtmenge, von ein oder mehreren gesättigten Fettsäuren mit 10 bis 20 C-Atomen und/oder deren Ammoniumsalze enthält.

2. Lotpaste nach Anspruch 1, **dadurch gekennzeichnet,** **daß** sie 0,02 bis 0,1 Gew.%, bezogen auf die Gesamtmenge, an Fettsäuren und/oder deren Ammoniumsalze enthält.

3. Lotpaste nach Anspruch 1 oder 2, **dadurch gekennzeichnet,** **daß** sie eine oder mehrere Fettsäuren aus der Gruppe Laurinsäure, Myristinsäure, Palmitinsäure, Stearinsäure und/oder deren Ammoniumsalze enthält.

4. Lotpaste nach eine der Ansprüche 1 bis 3, **dadurch gekennzeichnet,** **daß** das wasserverdünnbare Bindemittel im wesentlichen aus einem oder mehreren alipatischen Glykolen aus der Gruppe Ethylenglycol, Propylenglycol, Diethylenglycol, Triethylenglycol, Dipropylenglycol, Hexylenglycol, besteht.

5. Lotpaste nach einem der Ansprüche 1 bis 4, **dadurch gekennzeichnet,** **daß** der Anteil an Bindemittel 27 bis 30 Gew.%, bezogen auf die Gesamtmenge, beträgt.

6. Lotpaste nach einem der Ansprüche 1 bis 5, **dadurch gekennzeichnet,** **daß** sie ein Aluminium-Hartlotpulver vom Typ Al-Si 5-12 % enthält.

7. Lotpaste nach Anspruch 6, **dadurch gekennzeichnet,** **daß** das Aluminium-Hartlotpulver eine Partikelgröße zwischen 10 und 500 μm, vorzugsweise zwischen 50 und 150 μm, aufweist.

8. Lotpaste nach einem der Ansprüche 1 bis 7, **dadurch gekennzeichnet,** **daß** der Anteil an Aluminium-Hartlotpulver 30 bis 40 Gew.%, bezogen auf die Gesamtmenge, beträgt.

9. Lotpaste nach einem der Ansprüche 1 bis 8, **dadurch gekennzeichnet,** **daß** sie ein Aluminium-Flußmittel auf Basis komplexer Alkalialuminiumfluoride enthält.

10. Lotpaste nach einem der Ansprüche 1 bis 9, **dadurch gekennzeichnet,** **daß** der Anteil an Aluminium-Flußmittel 30 bis 40 Gew.%, bezogen auf die Gesamtmenge, beträgt.

11. Verwendung von gesättigten Fettsäuren mit 10 bis 20 C-Atomen und/oder deren Ammoniumsalze in einem Anteil von 0,01 bis 0,2 Gew.%, bezogen auf die Gesamtmenge, zur Beeinflussung der rheologischen Eigenschaften von Lotpasten zum Hartlöten und Beschichten von Werkstücken aus Aluminium oder Aluminiumlegierungen, enthaltend in einem wasserverdünnbaren organischen Bindemittel ein Aluminium-Hartlotpulver und ein Aluminium-Flußmittel, insbesondere zur Erhöhung der Thixotropie und/oder der Strukturviskosität

**Claims**

1. Brazing paste for the brazing and coating of workpieces made of aluminium or aluminium alloys, containing 25 to 35 wt.% of a water-dilutable, organic binder based on aliphatic glycols, 25 to 45 wt.% of an aluminium brazing powder and 25 to 45 wt.% of an aluminium flux,
   **characterised in that**
   it contains 0.01 to 0.2 wt.%, based on the total quantity, of one or more saturated fatty acids with 10 to 20 C atoms and/or the ammonium salts thereof.

2. Brazing paste according to claim 1,
   **characterised in that**
   it contains 0.02 to 0.1 wt.%, based on the total quantity, of fatty acids and/or the ammonium salts thereof.

3. Brazing paste according to claim 1 or 2,
   **characterised in that**
   it contains one or more fatty acids from the group consisting of lauric acid, myristic acid, palmitic acid, stearic acid and/or the ammonium salts thereof.

4. Brazing paste according to one of claims 1 to 3,
   **characterised in that**
   the water-dilutable binder substantially consists of one or more aliphatic glycols from the group consisting of ethylene glycol, propylene glycol, diethylene glycol, triethylene glycol, dipropylene glycol and hexylene glycol.

5. Brazing paste according to one of claims 1 to 4,
   **characterised in that**
   the proportion of binder is 27 to 30 wt.%, based on the total quantity.

6. Brazing paste according to one of claims 1 to 5,
   **characterised in that**
   it contains an aluminium brazing powder of the type Al-Si 5-12%.

7. Brazing paste according to claim 6,
   **characterised in that**
   the aluminium brazing powder has a particle size of between 10 and 500 $\mu$m, preferably between 50 and 150 $\mu$m.

8. Brazing paste according to one of claims 1 to 7,
   **characterised in that**
   the proportion of aluminium brazing powder is 30 to 40 wt.%, based on the total quantity.

9. Brazing paste according to one of claims 1 to 8,
   **characterised in that**
   it contains an aluminium flux based on complex alkali aluminium fluorides.

10. Brazing paste according to one of claims 1 to 9,
    **characterised in that**
    the proportion of aluminium flux is 30 to 40 wt.%, based on the total quantity.

11. Use of saturated fatty acids with 10 to 20 C atoms and/or the ammonium salts thereof in a proportion of 0.01 to 0.2 wt.%, based on the total quantity, for influencing the rheological properties of brazing pastes for the brazing and coating of workpieces made of aluminium or aluminium alloys, containing an aluminium brazing powder and an aluminium flux in a water-dilutable organic binder, in particular for increasing the thixotropy and/or the structural viscosity.

**Revendications**

1. Pâte de brasure pour le brassage et le revêtement de pièces usinées en aluminium ou en alliages d'aluminium, contenant de 25 à 35 % en poids d'un agent liant organique diluable à l'eau à base de glycols aliphatiques, de 25 à 45 % en poids d'une poudre de brasure pour aluminium et de 25 à 45 % en poids d'un agent fondant pour aluminium,

**caractérisée en ce qu'**

elle contient de 0,01 à 0,2 % en poids, rapporté à la quantité totale, d'un ou plusieurs acides gras saturés ayant de 10 à 20 atomes de carbone et/ou de leurs sels d'ammonium.

2. Pâte de brasure selon la revendication 1,
   **caractérisée en ce qu'**
   elle contient de 0,02 à 0,1 % en poids, rapporté à la quantité totale d'acides gras et/ou de leurs sels d'ammonium.

3. Pâte de brasure selon la revendication 1 ou la revendication 2,
   **caractérisée en ce qu'**
   elle contient un ou plusieurs acides gras choisis dans le groupe de l'acide laurique, de l'acide myristique, de l'acide palmitique, de l'acide stéarique et/ou de leurs sels d'ammonium.

4. Pâte de brasure selon l'une quelconque des revendications 1 à 3,
   **caractérisée en ce que**
   l'agent liant diluable à l'eau consiste essentiellement en un ou plusieurs glycols aliphatiques choisi dans le groupe de l'éthylèneglycol, le propylèneglycol, le diéthylèneglycol, le triéthylèneglycol, le dipropylèneglycol et de l'hexylèneglycol.

5. Pâte de brasure selon l'une quelconque des revendications 1 à 4,
   **caractérisée en ce que**
   la proportion d'agent liant s'élève à de 27 à 30 % en poids rapporté à la quantité totale.

6. Pâte de brasure selon l'une quelconque des revendications 1 à 5,
   **caractérisée en ce qu'**
   elle contient une poudre de brasure pour l'aluminium, du type Al-Si à 5 à 12 %.

7. Pâte de brasure selon la revendication 6,
   **caractérisée en ce que**
   la poudre de brasure pour l'aluminium possède une taille de particules comprise entre 10 et 500 μm, de préférence entre 50 et 150 μm.

8. Pâte de brasure selon l'une quelconque des revendications 1 à 7,
   **caractérisée en ce que**
   la proportion de poudre de brasure pour l'aluminium s'élève à de 30 à 40 % en poids, rapporté à la quantité totale.

9. Pâte de brasure selon l'une quelconque des revendications 1 à 8,
   **caractérisée en ce qu'**
   elle contient un agent fondant pour l'aluminium à base d'aluminofluorures de métal alcalin complexes.

10. Pâte de brasure selon l'une quelconque des revendications 1 à 9,
    **caractérisée en ce que**
    la proportion d'agent fondant pour aluminium s'élève à de 30 à 40 % en poids rapporté à la quantité totale.

11. Utilisation d'acides gras saturés ayant de 10 à 20 atomes de carbone et/ou de leurs sels d'ammonium en une proportion allant de 0,01 à 0,2 % en poids rapporté à la quantité totale, en vue d'exercer une influence sur les propriétés rhéologiques de pâtes de brasure pour le brassage et le revêtement de pièces usinées en aluminium ou alliages d'aluminium contenant dans un agent liant organique, diluable à l'eau, une poudre de brasure pour l'aluminium et un agent fondant pour l'aluminium, en particulier en vue d'augmenter la thixotropie et/ou la viscosité structurelle.